# NOUVEAU FASCICULE DE BREVET EUROPEEN

(11) **EP 1 128 509 B2**
(45) Date de publication et mention de la décision concernant l'opposition: **26.09.2012**
(45) Mention de la délivrance du brevet: 10.09.2008
(21) Numéro de dépôt: 01400444.4
(22) Date de dépôt: 20.02.2001
(51) Int. Cl.: H01H 31/00, H01H 31/24, H02B 13/035

(54) **Commutateur électrique à trois positions avec un élément de commutation mobile axialement**
Dreistellungsschalter mit einem axial beweglichen Schaltelement
Three-position switch with an axially movable switching element

(30) Priorité: 23.02.2000 FR 0002249
(43) Date de publication de la demande: 29.08.2001
(73) Titulaire: AREVA T&D SA, 92084 Paris La Defense Cedex (FR)
(72) Inventeur: Gutalj, Vladimir, 5036 Oberentfelden (CH)
(74) Mandataire: Poulin, Gérard

(56) Documents cités:
- EP-A2- 0 824 264
- EP-B1- 0 678 952
- DE-A1- 4 210 545
- DE-U1- 8 220 782
- FR-A- 2 346 884
- FR-A1- 2 346 884
- US-A- 4 354 220
- US-A- 5 625 179
- US-A- 5 721 412

## Description

L'invention concerne un commutateur électrique blindé à trois positions de commutation et à isolation au gaz, comprenant deux contacts fixes de coupure, un contact fixe de terre et un élément de commutation mobile suivant une direction axiale pour connecter les contacts fixes entre eux.

Un tel commutateur électrique est plus particulièrement utilisé pour réaliser un sectionnement dans une interconnexion de conducteurs de phase d'une installation haute tension.

Du document de brevet DE-2414200, on connaît un tel commutateur dans lequel l'élément de commutation est déplacé par une vis sans fin couplée à un engrenage. La construction de ce commutateur connu nécessite de prévoir un carter métallique de blindage qui est encombrant pour loger la vis sans fin parallèlement à l'élément de commutation.

Le but de l'invention est de proposer un commutateur électrique à trois positions ayant une construction plus simple, plus compacte et qui peut être utilisé pour différents schémas d'interconnexion sans changement de sa structure externe.

FR-A-2 346 884 décrit un commutateur à un élément de commutation à deux positions pour ouvrir et fermer la ligne entre les contacts fixes de coupure, et un autre élément de commutation à deux position pour mettre un des contacts fixes de coupure à la terre.

US-A-5 625 179 est semblable. L'invention est définie par la revendication 1.

Selon un mode particulier de réalisation du commutateur selon l'invention, chaque contact fixe de coupure comporte un alésage qui est coaxial à l'élément de commutation et dans lequel pénètre l'élément de commutation. Dans cette construction, le contact fixe de coupure qui est traversé par l'élément de commutation est celui qui peut être mis à la terre.

Selon encore un mode particulier de réalisation du commutateur selon l'invention, le carter métallique dans lequel sont disposés lesdits contacts fixes de coupure et de terre et ledit élément de commutation comporte deux ouvertures opposées de part et d'autre de ladite direction axiale de déplacement de l'élément de commutation, chaque ouverture étant munie d'un support en matière isolante électriquement et d'une électrode sur laquelle est fixé de façon amovible un desdits contacts fixes de coupure. Avec cette construction, les deux contacts fixes de coupure peuvent être facilement permutés pour pouvoir relier l'une ou l'autre des électrodes à la terre en fonction du schéma d'interconnexion choisi.

Un exemple de réalisation du commutateur selon l'invention est décrit ci-après en détail et illustré sur les dessins.
La figure 1 est une vue schématique en coupe du commutateur selon l'invention dans lequel un des deux contacts fixes de coupure est mis à la terre.
La figure 2 est une vue schématique en coupe du commutateur selon l'invention dans lequel les deux contacts fixes de coupure sont connectés entre eux par l'intermédiaire de l'élément de commutation.

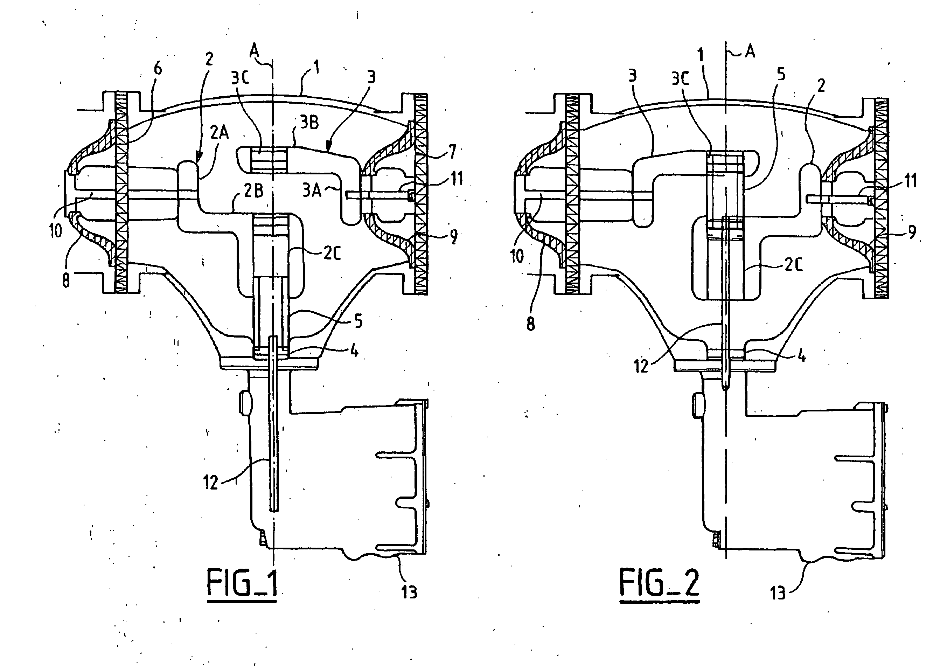

Figures 1 et 2, le commutateur électrique ou sectionneur à trois positions selon l'invention comprend un carter métallique 1 contenant un gaz diélectrique sous une pression de quelques bars, par exemple de l'hexafluorure de soufre, dans lequel sont disposés un premier contact fixe de coupure 2, un second contact fixe de coupure 3, un troisième contact fixe de terre 4 et un élément cylindrique de commutation 5 qui est mobile suivant une direction axiale A à l'intérieur du carter 1.

Le carter 1 a deux ouvertures 6 et 7, ici de forme circulaire, disposées en opposition de part et d'autre de la direction A et qui sont destinées à être raccordées à deux tronçons d'une barre collectrice blindée. Chaque ouverture 6 ou 7 est munie d'un cône ou d'un disque 8,9 réalisé en une matière isolante électriquement qui sert à supporter une électrode 10,11 de conduction du courant sur laquelle vient se fixer de façon amovible, par exemple par boulonnage, un contact fixe de coupure. Comme visible sur les figures, les électrodes 10 et 11 s'étendent chacune depuis le centre d'une ouverture du carter et sont alignées axialement.

Chaque contact de coupure 2,3 comporte un premier bras 2A,3A respectivement qui s'étend parallèlement à la direction A et qui est fixé de façon amovible à une électrode et un second bras 2B,3B respectivement qui s'étend perpendiculairement au second bras en formant un L avec celui-ci et dans lequel pénètre l'élément de commutation. Le second bras 2B,3B de chaque contact de coupure comporte un alésage 2C,3C dans lequel pénètre l'élément de commutation 5.

Dans la construction représentée sur les figures 1 et 2, les contacts fixes de coupure 2 et 3 sont disposés de telle façon que les deux L forment un parallélogramme. Dans cette disposition, les deux bras 2B,3B des contacts de coupure sont superposés suivant la direction A et les deux alésages 2C et 3C sont coaxiaux à l'élément de commutation 5.

L'élément de commutation 5 est déplacé suivant la direction A à l'aide d'une tige de manoeuvre 12 rigide en matière isolante qui pénètre à l'intérieur du carter 1 par une traversée disposée dans un renfoncement du carter 1 et s'étend dans un autre carter 13 raccordé au carter 1 dans lequel est placé un mécanisme de commande de la tige 12.

Le contact de terre 4 en forme de couronne est disposé dans le renfoncement du carter 1 mis au potentiel de la terre et entoure de façon coaxiale l'élément de commutation 5 et la tige 12.

L'alésage 2C du contact de coupure 2 qui est le plus proche du contact de terre est traversant et suffisamment allongé pour guider en translation l'élément de commutation 5.

Sur la figure 1, le contact de coupure 2 est fixé à l'électrode 10 située sur la partie gauche du carter 1 et le contact de coupure 3 est fixé à l'électrode 11 située sur la partie droite du carter 1. Sur cette figure, l'élément de commutation 5 est engagé dans le contact de terre 4 et pénètre dans l'alésage 2C du contact 2 mais ne pénètre pas dans l'alésage 3C du contact 3 du fait de sa longueur ajustée. Dans cette disposition de l'élément de commutation, l'électrode 8 qui est reliée au contact de coupure 2 est mise à la terre. La longueur de l'élément de commutation selon la direction A est approximativement égale à la distance entre le contact de terre et le contact de coupure 2 ou la distance entre les deux contacts de coupure 2 et 3.

Sur la figure 2, les contacts de coupure 2 et 3 ont été permutés sur les électrodes 10 et 11 par rapport à la disposition de la figure 1. Plus particulièrement, le contact de coupure 2 est maintenant fixé à l'électrode 11 et le contact de coupure 3 est fixé à l'électrode 10. L'élément de commutation 5 traverse l'alésage 2C du contact de coupure 2 et pénètre dans l'alésage 3C du contact de coupure 3 mais est dégagé du contact de terre 4 ce qui fait que les deux contacts de coupure 2 et 3 sont connectés électriquement entre eux. Si l'élément de coupure 5 est déplacé pour occuper la même position que sur la figure 1, on obtient une mise à la terre de l'électrode 11 sur laquelle est fixé le contact de coupure 2.

La construction des contacts fixes de coupure et de terre selon l'invention permet d'obtenir des distances d'isolement entre les contacts fixes de coupure et de terre suffisantes dans un carter 1 de forme compacte. En plus cette disposition des contacts fixes de coupure et de terre avec l'élément de commutation permet d'établir une connexion à la terre sur l'une ou l'autre des ouvertures du carter 1 par une simple permutation des contacts fixes 2 et 3. Cette permutation peut être effectuée en dernière minute ou quand le commutateur à trois positions a déjà été mis en service, sans changement de la structure extérieure du carter 1 ni de la commande de la tige de manoeuvre 12.

## Revendications

1. Un commutateur électrique blindé à trois positions de commutation et à isolation au gaz dans un carter métallique (1), comprenant deux contacts fixes de coupure (2,3) ainsi qu'un contact fixe de terre (4) et un élément de commutation (5) mobile suivant une direction axiale (A) pour connecter les contacts fixes de coupure (2,3) entre eux, où les deux contacts fixes de coupure (2,3) ainsi que le contact fixe de terre (4) sont superposés suivant ladite direction axiale, ledit élément de commutation (5) est déplacé à l'aide d'une tige de manoeuvre (12) qui traverse le contact fixe de terre (4), afin que ledit élément de commutation (5) puisse occuper chacune des trois positions de commutation dont une position de mise à la terre dans laquelle il connecte un contact de coupure (2) au contact fixe de terre (4), **caractérisé en ce que** la tige de manoeuvre (12) est déplacée linéairement, pénètre à l'intérieur du carter (1) et s'étend dans un autre carter (13) raccordé audit carter (1) et dans lequel est placé un mécanisme de commande de la tige (12).

2. Le commutateur selon la revendication 1, dans lequel chaque contact fixe de coupure (2,3) comporte un alésage (2C,3C) coaxial à l'élément de commutation (5) et dans lequel pénètre l'élément de commutation.

3. Le commutateur selon la revendication 2, dans lequel le carter métallique (1), où sont disposés lesdits contacts fixes de coupure (2,3) et de terre (4) ainsi que ledit élément de commutation (5), a deux ouvertures (6,7) opposées de part et d'autre de ladite direction axiale, chaque ouverture étant munie d'un support en matière isolante (8,9) électriquement et d'une électrode (10,11) sur laquelle est fixé de façon amovible un desdits contacts fixes de coupure (2,3).

4. Le commutateur selon la revendication 3, dans lequel les contacts fixes de coupure (2,3) ont chacun un premier bras (2A,3A) qui s'étend parallèlement à ladite direction axiale et qui est fixé à une électrode, un second bras (2B,3B) qui s'étend perpendiculairement au premier bras en formant un L avec celui-ci et dans lequel pénètre l'élément de commutation, lesdits contacts fixes de coupure (2, 3) étant disposés de telle façon que les deux L forment un parallélogramme.

## Claims

1. A three-position, gas-insulated, metal-clad electrical switch inside a metal casing (1) comprising two fixed break contacts (2, 3), as well as a fixed grounding contact (4), and a switching element (5) which is movable in an axial direction (A) to interconnect said break contacts (2, 3), where the two fixed break contacts (2, 3) and the fixed grounding contact (4) are superposed in said axial direction, said switching element (5) is moved by means of a drive rod (12) which passes through the fixed grounding contact (4), thereby enabling said switching element (5) to occupy each of the three switching positions including a grounding position in which it connects a break contact (2) to the fixed grounding contact (4), **characterized in that** the drive rod (12) is moved in a linear direction, penetrates inside the casing (1) and extends in another casing (13) connected to said casing (1) and housing a drive rod mechanism (12).

2. The switch as claimed in Claim 1, in which each break contact (2, 3) comprises a bore (2C, 3C) coaxial to the switching element (5) in which the switching element penetrates.

3. The switch as claimed in Claim 2, in which the metal-clad casing (1), which houses said break contacts (2, 3) and grounding contact (4) as well as said switching element (5), has two opposite openings (6, 7) on either side of the axial direction, each opening being provided with an electrically insulating support (8, 9) and an electrode (10, 11) on which one of said break contacts (2, 3) is fixed in removable manner.

4. The switch as claimed in Claim 3, in which each of the break contacts (2, 3) has a first arm (2A, 3A) which extends parallel to said axial direction and which is fixed to an electrode, and also a second arm (2B, 3B) which extends perpendicularly to the first arm to form an L-shape therewith, and into which the switching element penetrates, said break contacts (2, 3) being disposed in such a manner that the two L-shapes form a rectangle.

## Patentansprüche

1. Gasisoliert gekapselter, elektrischer Schalter mit drei Schaltstellungen in einem Metallgehäuse (1), mit zwei festen Unterbrechungskontakten (2, 3) sowie einem festen Erdungskontakt (4) und einem in einer axialen Richtung (A) verstellbaren Schaltelement (5) zum Verbinden der festen Unterbrechungskontakte (2, 3) miteinander, wo die beiden festen Unterbrechungskontakte (2, 3) sowie der feste Erdungskontakt (4) in der axialen Richtung übereinanderliegen, wobei das Schaltelement (5) mit Hilfe eines Bedienstifts (12) verstellt wird, welcher sich durch den festen Erdungskontakt (4) erstreckt, damit das Schaltelement (5) jede der drei Schaltstellungen einnehmen kann, darunter eine Erdungsstellung, in welcher es einen Unterbrechungskontakt (2) mit dem festen Erdungskontakt (4) verbindet, **dadurch gekennzeichnet, dass** der Bedienstift (12) linear verstellbar ist, in das Innere des Gehäuse (1) eingreift und sich in ein weiteres Gehäuse (13) erstreckt, das an das Gehäuse (1) angeschlossen ist und in welchem ein Betätigungsmechanismus zum Bestätigen des Stifts (12) angeordnet ist.

2. Schalter nach Anspruch 1, wobei jeder feste Unterbrechungskontakt (2, 3) eine Bohrung (2C, 3C) aufweist, die koaxial zum Schaltelement (5) verläuft und in die das Schaltelement eingreift.

3. Schalter nach Anspruch 2, wobei das Metallgehäuse (1), wo die festen Unterbrechungskontakte (2, 3) und der feste Erdungskontakt (4) sowie das Schaltelement (5) angeordnet sind, zwei entgegengesetzte Öffnungen (6, 7) beiderseits der axialen Richtung hat, wobei jede Öffnung mit einem Halter (8, 9) aus elektrisch isolierendem Material und mit einer Elektrode (10, 11) versehen ist, an welcher einer der festen Unterbrechungskontakte (2, 3) abnehmbar befestigt ist.

4. Schalter nach Anspruch 3, wobei die festen Unterbrechungskontakte (2, 3) jeweils einen ersten Schenkel (2A, 3A) halben, der sich parallel zur axialen Richtung erstreckt und an einer Elektrode befestigt ist, sowie einen zweiten Schenkel (2B, 3B), der sich senkrecht zum ersten Schenkel erstreckt und dabei mit diesem eine L-Form bildet, und in welchen das Schaltelement eingreift, wobei die festen Unterbrechungskontakte (2, 3) so angeordnet sind, dass die beiden L-Formen ein Parallelogramm bilden.
